# EUROPEAN PATENT APPLICATION

(11) **EP 4 550 155 A1**
(43) Date of publication of application: **07.05.2025**
(21) Application number: 23842209.1
(22) Date of filing: 14.07.2023
(51) Int. Cl.: G06F 12/10

(54) **DATA COPYING METHOD AND APPARATUS, COMPUTER-READABLE STORAGE MEDIUM, AND ELECTRONIC DEVICE**

(30) Priority: 22.07.2022 CN 202210868561
(71) Applicant: Horizon Journey (Hangzhou) Technology Co., Ltd., Hangzhou, Zhejiang 310000 (CN)
(72) Inventor: ZHANG, Bin, Hangzhou, Zhejiang 310000 (CN); XU, Shengjian, Hangzhou, Zhejiang 310000 (CN)
(74) Representative: V.O.
(86) International application number: PCT/CN2023/107353
(87) International publication number: WO 2024/017146

(57) **Abstract**

Embodiments of this disclosure disclose a data copying method and apparatus, a computer readable storage medium, and an electronic device. The method includes: generating an address translation request by using a target virtual machine, where the address translation request includes an intermediate physical address; converting the intermediate physical address into a physical address by using a memory management unit; configuring the physical address into a direct memory access controller by using the target virtual machine; and controlling, by using the direct memory access controller, a target module to perform data copying according to the physical address, where the target module includes a memory module and/or a peripheral module. According to the embodiments of this disclosure, manufacturing costs of chips can be reduced.

## Description

This disclosure claims the priority to the Chinese patent application No. CN202210868561.8, filed with the Chinese Patent Office on July 22, 2022 and entitled "DATA COPYING METHOD AND APPARATUS, COMPUTER READABLE STORAGE MEDIUM, AND ELECTRONIC DEVICE", which is incorporated herein by references in its entirety.

### FIELD OF THE INVENTION

This disclosure relates to chip technologies, and in particular, to a data copying method and apparatus, a computer readable storage medium, and an electronic device.

### BACKGROUND OF THE INVENTION

Use of a virtualization manager can enable multiple virtual machines to run simultaneously on a single chip. The chip may include a direct memory access (DMA) controller, and may also be equipped with a system memory management unit (SMMU).

### SUMMARY OF THE INVENTION

Embodiments of this disclosure provide a data copying method and apparatus, a computer readable storage medium, and an electronic device.

According to an aspect of an embodiment of this disclosure, a data copying method is provided, including:
generating an address translation request by using a target virtual machine, where the address translation request includes an intermediate physical address;
converting the intermediate physical address into a physical address by using a memory management unit;
configuring the physical address into a direct memory access controller by using the target virtual machine; and
controlling, by using the direct memory access controller, a target module to perform data copying according to the physical address, where the target module includes a memory module and/or a peripheral module.

According to another aspect of an embodiment of this disclosure, a data copying apparatus is provided, including:
a generation module, configured to generate an address translation request by using a target virtual machine, wherein the address translation request includes an intermediate physical address;
a conversion module, configured to convert the intermediate physical address included in the address translation request generated by the generation module into a physical address by using a memory management unit;
a configuration module, configured to configure the physical address converted by the conversion module into a direct memory access controller by using the target virtual machine; and
a control module, configured to control, by using the direct memory access controller, a target module to perform data copying according to the physical address converted by the conversion module, wherein the target module includes a memory module and/or a peripheral module.

According to still another aspect of an embodiment of this disclosure, a computer readable storage medium is provided. The storage medium stores a computer program, and the computer program is used for implementing the data copying method described above.

According to a yet another aspect of an embodiment of this disclosure, an electronic device is provided, including:
a processor; and
a memory, configured to store processor-executable instructions, where
the processor is configured to read the executable instructions from the memory, and execute the instructions to implement the data copying method described above.

According to a still yet another aspect of an embodiment of this disclosure, a computer program product is provided. When instructions in the computer program product are executed by a processor, the data copying method described above is implemented.

Based on the data copying method and apparatus, the computer readable storage medium, the electronic device, and the product that are provided in the foregoing embodiments of this disclosure, the address translation request may be generated by using the target virtual machine, the intermediate physical address in the address translation request may be converted into the physical address by using the memory management unit, and the physical address may be configured into the direct memory access controller by using the target virtual machine. In the embodiments of this disclosure, it is the physical address rather than the intermediate physical address that is configured into the direct memory access controller. Based on the physical address, the direct memory access controller may control the target module to perform data copying, without using a system memory management unit to perform address translation. Therefore, there is no need to provide a system memory management unit in a chip, thus manufacturing costs of the chip can be reduced.

The technical solutions of this disclosure are further described below in detail with reference to the accompanying drawings and the embodiments.

### BRIEF DESCRIPTION OF THE DRAWINGS

FIG. 1 is a schematic diagram of a structure of a chip according to related technologies;
FIG. 2 is a schematic diagram of an operating principle of a chip according to related technologies;
FIG. 3 is a schematic diagram of another operating principle of a chip according to related technologies;
FIG. 4 is a schematic diagram of a structure of a chip according to an embodiment of this disclosure;
FIG. 5 is a diagram of an operating principle of a chip according to an embodiment of this disclosure;
FIG. 6 is a diagram of another operating principle of a chip according to an embodiment of this disclosure;
FIG. 7 is a schematic flowchart of a data copying method according to an exemplary embodiment of this disclosure;
FIG. 8 is a schematic flowchart of a data copying method according to another exemplary embodiment of this disclosure;
FIG. 9 is a schematic flowchart of a data copying method according to still another exemplary embodiment of this disclosure;
FIG. 10 is a schematic flowchart of a data copying method according to yet another exemplary embodiment of this disclosure;
FIG. 11 is a schematic flowchart of a data copying method according to still yet another exemplary embodiment of this disclosure;
FIG. 12 is a schematic flowchart of a data copying method according to a further exemplary embodiment of this disclosure;
FIG. 13-1 is a schematic flowchart of a data copying method according to a still further exemplary embodiment of this disclosure;
FIG. 13-2 is a schematic flowchart of a data copying method according to a yet further exemplary embodiment of this disclosure;
FIG. 14-1 is a schematic flowchart of a data copying method according to a still yet further exemplary embodiment of this disclosure;
FIG. 14-2 is a schematic flowchart of a data copying method according to an even yet further exemplary embodiment of this disclosure;
FIG. 15-1 is a schematic flowchart of a data copying method according to an even yet further exemplary embodiment of this disclosure;
FIG. 15-2 is a schematic flowchart of a data copying method according to an even yet further exemplary embodiment of this disclosure;
FIG. 16 is a schematic flowchart of a data copying method according to an even yet further exemplary embodiment of this disclosure;
FIG. 17 is a schematic diagram of a structure of a data copying apparatus according to an exemplary embodiment of this disclosure;
FIG. 18 is a schematic diagram of a structure of a data copying apparatus according to another exemplary embodiment of this disclosure; and
FIG. 19 is a diagram of a structure of an electronic device according to an exemplary embodiment of this disclosure.

### DETAILED DESCRIPTION OF THE EMBODIMENTS

To explain this disclosure, exemplary embodiments of this disclosure are described below in detail with reference to accompanying drawings. Obviously, the described embodiments are merely a part, rather than all of embodiments of this disclosure. It should be understood that this disclosure is not limited by the exemplary embodiments.

It should be noted that unless otherwise specified, the scope of this disclosure is not limited by relative arrangement, numeric expressions, and numerical values of components and steps described in these embodiments.

### Application overview

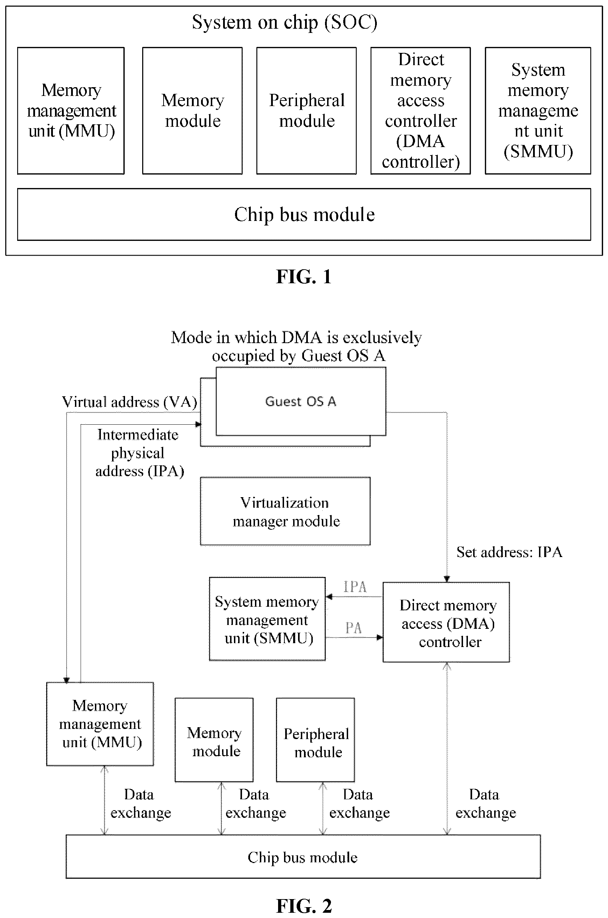

A chip may be a system on chip (SOC). As shown in FIG. 1, FIG. 2, and FIG. 3, in related technologies, the chip may include a memory management unit (MMU), a memory module, a peripheral module, a direct memory access controller, a system memory management unit, and a chip bus module.

A basic function of the memory management unit is virtual memory management, including but not limited to converting a virtual address into a physical address (PA), converting a virtual address to an intermediate physical address (IPA), and converting an intermediate physical address into a physical address.

The direct memory access controller is used for data copying, that is, for copying data from one address space to another address space.

The system memory management unit may be responsible for managing chip peripherals.

It should be noted that multiple virtual machines (Guest OS) may run simultaneously on a single chip through a virtualization manager (which is also referred to as a virtualization manager module). The virtualization manager and the multiple virtual machines may all be software modules running on the chip.

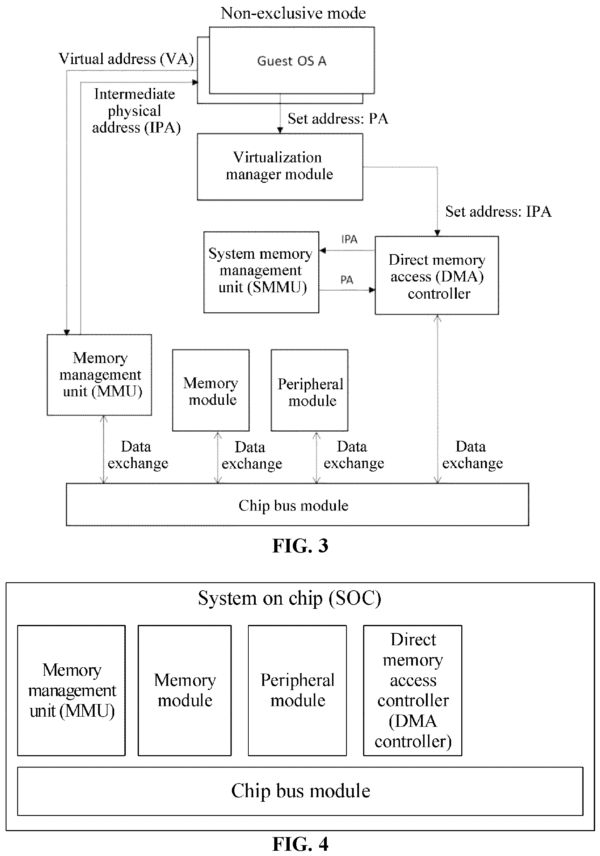

In actual operation, the virtual machine may indirectly operate hardware through the virtualization manager. When using the direct memory access controller, the virtual machine usually may configure a source address and a target address of the data into the direct memory access controller in an IPA form. For example, as shown in FIG. 2, when the direct memory access controller is exclusively occupied by a virtual machine of Guest OS A, the Guest OS A may directly configure the source address and the target address in the IPA form into the direct memory access controller. For another example, as shown in FIG. 3, when the Guest OS A does not exclusively occupies the direct memory access controller but shares the direct memory access controller with other virtual machines (in this case, the virtualization manager is responsible for implementing mutual exclusion when the direct memory access controller is accessed by various virtual machines), the Guest OS A may configure the source address and the target address in the IPA form into the direct memory access controller by using the virtualization manager.

After the source address and the target address in the IPA form are configured into the direct memory access controller, the source address and the target address in the IPA form may be converted into a source address and a target address in a PA form. The direct memory access controller may perform data copying based on the source address and the target address in the PA form, that is, control a relevant module to copy data from an address space corresponding to the source address in the PA form to an address space corresponding to the target address in the PA form.

### Exemplary system

In embodiments of this disclosure, a virtual machine may use a memory management unit to convert an address in an IPA form into an address in a PA form, and may also configure the address in the PA form into a direct memory access controller. In this way, the conversion from the address in the IPA form to the address in the PA form does not need to rely on other modules or units besides the memory management unit, such as a system memory management unit. Therefore, as shown in FIG. 4 to FIG. 6, there is no need to provide a chip with a system memory management unit for address translation. Thus, manufacturing costs of the chip may be reduced.

### Exemplary method

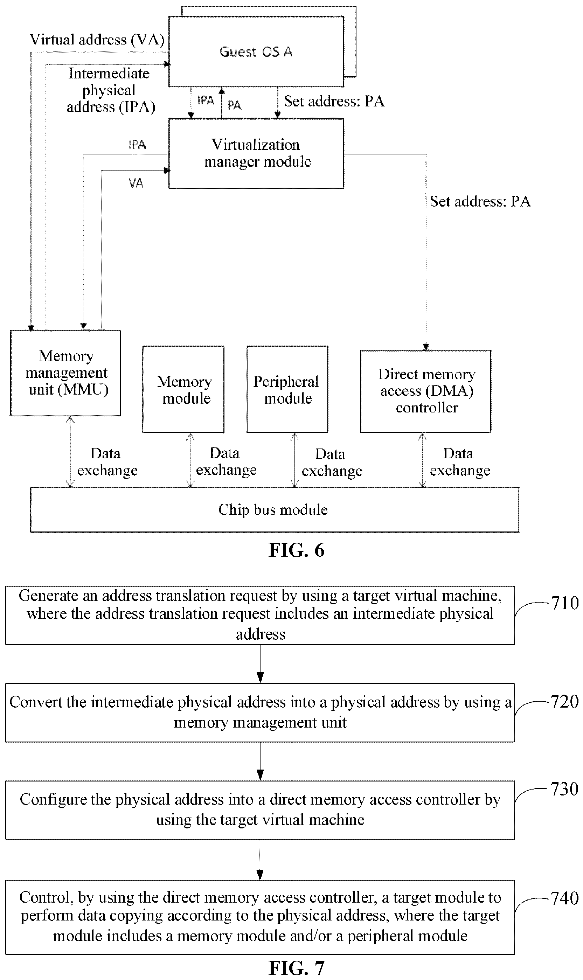

FIG. 7 is a schematic flowchart of a data copying method according to an exemplary embodiment of this disclosure. The method shown in FIG. 7 may include steps 710, 720, 730, and 740. These steps are described below, respectively.

Step 710. Generate an address translation request by using a target virtual machine, where the address translation request includes an intermediate physical address.

In an optional example, step 710 may be performed by a processor by calling corresponding instructions stored in a memory, or may be performed by a generation module that is run by the processor.

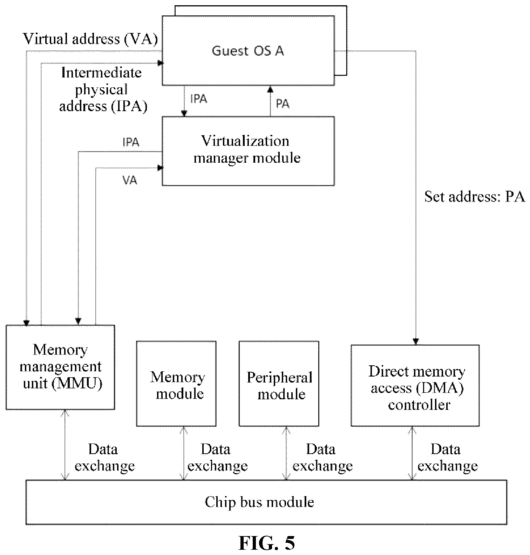

It should be noted that the target virtual machine may be any one of multiple virtual machines running on the chip, for example, may be a Guest OS A in FIG. 5 and FIG. 6. "Target" in the target virtual machine does not constitute a limitation on the target virtual machine.

Before generating the address translation request, the target virtual machine may obtain a virtual address and call a memory management unit to convert the virtual address into the intermediate physical address. Subsequently, the target virtual machine may generate the address translation request that includes the intermediate physical address. The address translation request is used for requesting to convert the intermediate physical address into a physical address.

Step 720. Convert the intermediate physical address into a physical address by using a memory management unit.

In an optional example, step 720 may be performed by the processor by calling corresponding instructions stored in the memory, or may be performed by a conversion module that is run by the processor.

Optionally, the target virtual machine may forward the address translation request to a memory management unit. In response to the address translation request, the memory management unit may convert the intermediate physical address included in the address translation request into the physical address. Alternatively, the target virtual machine may forward the address translation request to a virtualization manager. In response to the address translation request, the virtualization manager may call the memory management unit to convert the intermediate physical address included in the address translation request into the physical address.

Step 730. Configure the physical address into a direct memory access controller by using the target virtual machine.

In an optional example, step 730 may be performed by the processor by calling corresponding instructions stored in the memory, or may be performed by a configuration module that is run by the processor.

Optionally, the target virtual machine may configure the physical address into the direct memory access controller according to a preset copying manner. Alternatively, the target virtual machine may determine a copying manner that matches the physical address, and configure the physical address into the direct memory access controller according to the determined copying manner.

Step 740. Control, by using the direct memory access controller, a target module to perform data copying according to the physical address, wherein the target module includes a memory module and/or a peripheral module.

In an optional example, step 740 may be performed by the processor by calling corresponding instructions stored in the memory, or may be performed by a control module that is run by the processor.

As shown in FIG. 5 and FIG. 6, the memory module, the peripheral module, and the direct memory access controller may perform data exchange with a chip bus module, respectively. In this way, the direct memory access controller may control the memory module and/or the peripheral module based on forwarding and transmission of mutual information by the chip bus module. Under the control of the direct memory access controller, the memory module and/or the peripheral module may perform data copying according to the physical address.

In this embodiment of this disclosure, the address translation request may be generated by using the target virtual machine, the intermediate physical address in the address translation request may be converted into the physical address by using the memory management unit, and the physical address may be configured into the direct memory access controller by using the target virtual machine. In this embodiment of this disclosure, it is the physical address rather than the intermediate physical address that is configured into the direct memory access controller. Based on the physical address, the direct memory access controller may control the target module to perform data copying, without using a system memory management unit to perform address translation. Therefore, there is no need to provide a system memory management unit in the chip, thus manufacturing costs of the chip can be reduced.

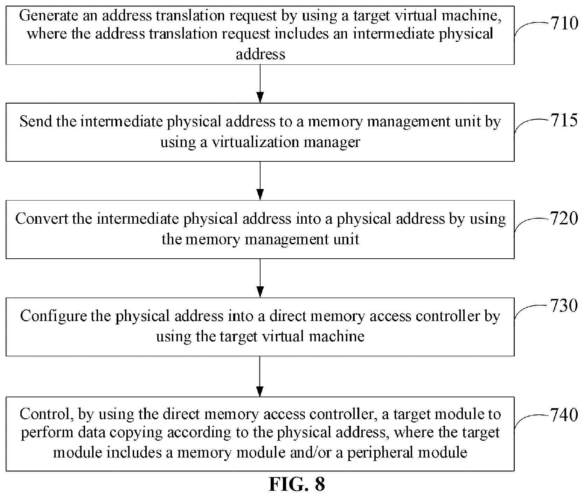

On the basis of the embodiment shown in FIG. 7, as shown in FIG. 8, before step 720, the method further includes step 715.

Step 715. Send the intermediate physical address to the memory management unit by using a virtualization manager.

In an optional example, step 715 may be performed by the processor by calling corresponding instructions stored in the memory, or may be performed by a sending module that is run by the processor.

After generating the address translation request, the target virtual machine may forward the address translation request to the virtualization manager. After receiving the address translation request from the target virtual machine, the virtualization manager may send the intermediate physical address included in the address translation request to the memory management unit. After receiving the intermediate physical address from the virtualization manager, the memory management unit may convert the intermediate physical address into a physical address and return the physical address to the virtualization manager. After receiving the physical address from the memory management unit, the virtualization manager may provide the physical address to the target virtual machine, so that the target virtual machine can configure the physical address into the direct memory access controller.

In this embodiment of this disclosure, by using the virtualization manager, the intermediate physical address included in the address translation request may be efficiently and reliably provided to the memory management unit, so that the memory management unit can perform corresponding address translation.

In an optional example, the intermediate physical address includes an intermediate physical source address and an intermediate physical target address, and the physical address includes a physical source address converted from the intermediate physical source address and a physical target address converted from the intermediate physical target address.

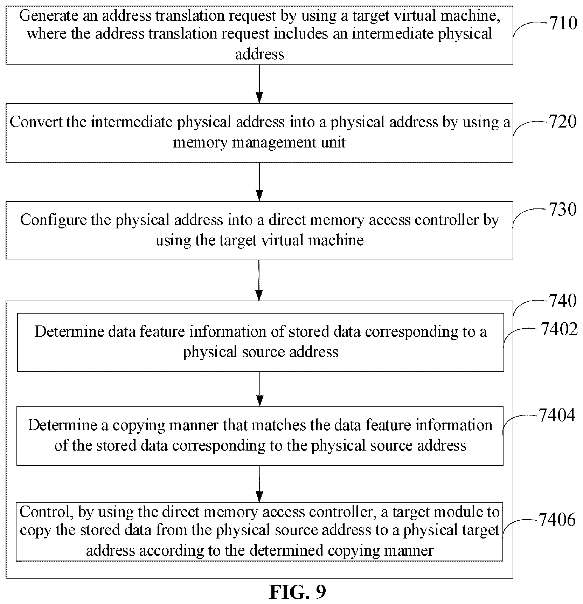

On the basis of the embodiment shown in FIG. 7, as shown in FIG. 9, step 740 includes steps 7402, 7404, and 7406.

Step 7402. Determine data feature information of stored data corresponding to the physical source address.

In an optional example, step 7402 may be performed by the processor by calling corresponding instructions stored in the memory, or may be performed by a first determining submodule in the control module that is run by the processor.

Optionally, the stored data corresponding to the physical source address may refer to data stored in an address space corresponding to the physical source address. The data feature information includes but is not limited to a data format, a data volume, and a data update cycle.

Step 7404. Determine a copying manner that matches the data feature information of the stored data corresponding to the physical source address.

In an optional example, step 7404 may be performed by the processor by calling corresponding instructions stored in the memory, or may be performed by a second determining submodule in the control module that is run by the processor.

It should be noted that a correspondence between the data feature information and the copying manner may be preset. The copying manner includes but is not limited to single transmission, loop transmission, and a double buffering mode. In step 7404, a copying manner corresponding to the data feature information determined in step 7402 may be determined based on the preset correspondence, and the determined copying manner may be used as the copying manner that matches the data feature information.

Step 7406. Control, by using the direct memory access controller, the target module to copy the stored data from the physical source address to the physical target address according to the determined copying manner.

In an optional example, step 7406 may be performed by the processor by calling corresponding instructions stored in the memory, or may be performed by a control submodule in the control module that is run by the processor.

Assuming that the intermediate physical source address included in the intermediate physical address is IPA 1 and the intermediate physical target address included in the intermediate physical address is IPA 2, the physical source address converted from the IPA 1 is PA 1 and the physical target address converted from the IPA 2 is PA 2. In this case, the physical address may include the PA 1 and the PA 2.

After the physical address including the PA 1 and the PA 2 is obtained, data feature information T1 of stored data Data 1 corresponding to the PA 1 may be determined. A copying manner C1 corresponding to the T1 is determined according to the preset correspondence between the data feature information and the copying manner, and the direct memory access controller is used to control the target module to copy the Data 1 from the PA 1 to the PA 2 according to the copying manner of C1 (to be specific, the Data 1 is copied from the address space corresponding to the PA 1 to the address space corresponding to the PA2).

Optionally, the PA 1 may be either an address in a memory or an address of a peripheral on a bus; and the PA 2 may be either an address in the memory or an address of a peripheral on the bus. In this way, when the Data 1 is copied from the PA 1 to the PA 2, a copying path of the Data 1 may have the following four situations: the address in the memory → the address in the memory; the address in the memory → the address of the peripheral; the address of the peripheral → the address of the peripheral; and the address of the peripheral → the address in the memory.

In this embodiment of this disclosure, the physical address converted from the intermediate physical address included in the address translation request may include both the physical source address and the physical target address. Moreover, with reference to the data feature information of the stored data corresponding to the physical source address, the stored data may be copied in a way that is compatible with the data feature information. For example, if an amount of the stored data is very small, the single transmission manner may be used to copy the stored data efficiently. For another example, if the stored data is peripheral data that needs to be periodically read, the loop transmission manner may be used to copy the stored data. Thus, it is beneficial for ensuring efficiency of data copying, and requirements for data can be satisfied.

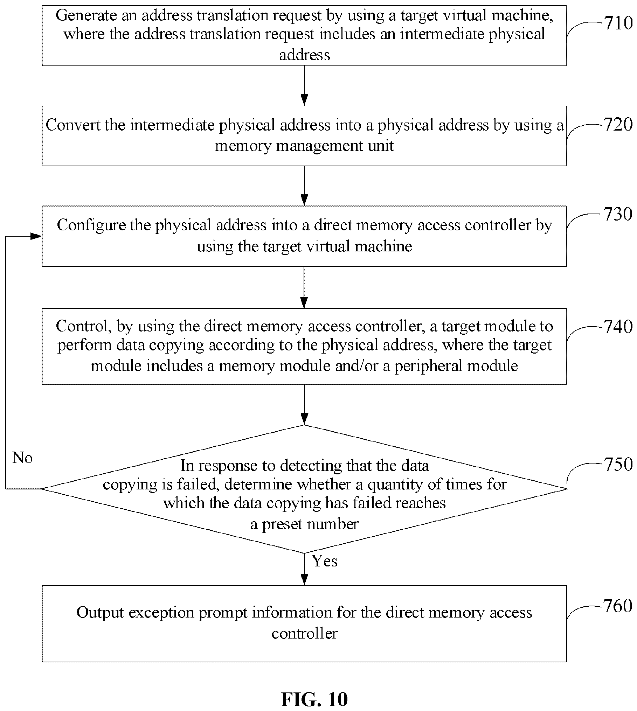

On the basis of the embodiment shown in FIG. 7, as shown in FIG. 10, after step 740, the method further includes steps 750 and 760.

Step 750. In response to detecting that the data copying is failed, determine whether a quantity of times for which the data copying has failed reaches a preset number, if yes, perform step 760; and if not, return to perform step 730.

Step 760. Output exception prompt information for the direct memory access controller.

In an optional example, the operation of in response to detecting that the data copying is failed, determining whether the quantity of times for which the data copying has failed reaches the preset number in step 750 may be performed by the processor by calling corresponding instructions stored in the memory, or may be performed by a trigger module or an output module that is run by the processor. The operation performed when the quantity of times for which the data copying has failed does not reach the preset number may be performed by the processor by calling corresponding instructions stored in the memory, or may be performed by the trigger module that is run by the processor (the trigger module is configured to trigger the execution of step 730). The operation performed when the quantity of times for which the data copying has failed reaches the preset number may be performed by the processor by calling corresponding instructions stored in the memory, or may be performed by the output module that is run by the processor.

Optionally, the preset number may be 2, 3, 4, 5, or the like, which is not enumerated herein.

Optionally, output forms of the exception prompt information include but are not limited to voice, text, and light.

After step 740 of controlling the target module to perform data copying according to the physical address is performed, whether the data copying is successful or failed may be detected.

If it is detected that the data copying is failed, the quantity of times for which the data copying has failed may be determined and may be compared with the preset number.

If the quantity of times for which the data copying has failed is smaller than the preset number, it may return to perform step 730. To be specific, the physical address is configured into the direct memory access controller again by using the target virtual machine. Subsequently, steps after step 730 may also be performed again.

If the quantity of times for which the data copying has failed is greater than or equal to the preset number, the exception prompt information for the direct memory access controller may be output. For example, "Abnormal DMA controller" is broadcasted through voice or is displayed through a pop-up window on a screen, so as to prompt a person to investigate reasons for the abnormal direct memory access controller. Generally, the reasons for the abnormal direct memory access controller include but are not limited to a clock error, an error in a power supply, an error in the memory module, an error in the peripheral module, an error in the direct memory access controller, and an error in electromagnetic compatibility (EMC) interference.

It should be noted that if the quantity of times for which the data copying has failed is greater than or equal to the preset number, in addition to outputting the exception prompt information, the execution of steps 710 to 740 may also be prohibited until the reasons for the abnormal direct memory access controller are investigated by the person and an exception in the direct memory access controller is eliminated.

In an optional example, the preset number is 2. The physical address converted from the intermediate physical address in the address translation request includes both the physical source address PA 1 and the physical target address PA 2. The PA 1 and the PA 2 are configured into the direct memory access controller for a first time by using the target virtual machine, and if it is detected that the data copying is failed after the target module is controlled to copy the Data 1 from the PA 1 to the PA 2 for a first time, since the quantity of times for which the data copying has failed is 1, which is less than the preset number, the PA 1 and the PA 2 may be configured into the direct memory access controller for a second time by using the target virtual machine, and the target module may be controlled to copy the Data 1 from the PA 1 to the PA 2 for a second time. After the target module is controlled to copy the Data 1 from the PA 1 to the PA 2 for the second time, if it is detected that the data copying is failed, since the quantity of times for which the data copying has failed is 2, which is equal to the preset number, the exception prompt information for the direct memory access controller may be output in a form of voice or text.

In this embodiment of this disclosure, after the target module is controlled to perform data copying according to the physical address, if the data copying is failed and the quantity of times for which the data copying has failed does not reach the preset number, it may return to perform the step of configuring the physical address, so as to try to perform data copying again. Moreover, if the data copying is failed and the quantity of times for which the data copying has failed reaches the preset number, no further attempts may be made to perform data copying, but the exception prompt information is output to prompt the person to investigate the reasons for the abnormal direct memory access controller, so as to eliminate the exception as soon as possible, so that data copying can be performed later.

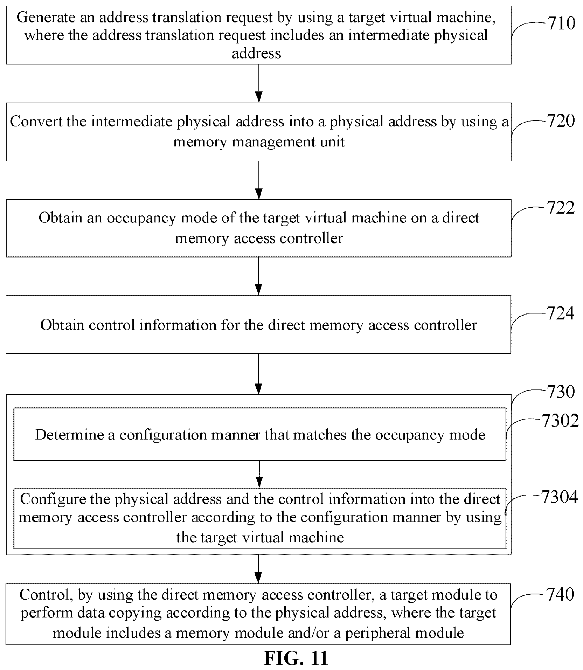

On the basis of the embodiment shown in FIG. 7, as shown in FIG. 11, before step 730, the method further includes steps 722 and 724.

Step 722. Obtain an occupancy mode of the target virtual machine on the direct memory access controller.

In an optional example, step 722 may be performed by the processor by calling corresponding instructions stored in the memory, or may be performed by a first obtaining module that is run by the processor.

It should be noted that there are two possible scenarios for the occupancy mode: an exclusive mode and a non-exclusive mode. In the exclusive mode, the target virtual machine may directly communicate with the direct memory access controller. In the non-exclusive mode, the target virtual machine may communicate with the direct memory access controller through the virtualization manager. For the exclusive mode, reference may be made to FIG. 5; and for the non-exclusive mode, reference may be made to FIG. 6.

Step 724. Obtain control information for the direct memory access controller.

In an optional example, step 724 may be performed by the processor by calling corresponding instructions stored in the memory, or may be performed by a second obtaining module that is run by the processor.

Optionally, the control information obtained in step 724 may also be referred to as DMA control information, which may include at least one of the following: information about a copy speed, information about a copy mode, and a data verification manner.

Step 730 includes steps 7302 and 7304.

Step 7302. Determine a configuration manner that matches the occupancy mode.

In an optional example, step 7302 may be performed by the processor by calling corresponding instructions stored in the memory, or may be performed by a third determining submodule in the configuration module that is run by the processor.

If the occupancy mode is the exclusive mode, the configuration manner that matches the occupancy mode may be configuring directly. If the occupancy mode is the non-exclusive mode, the configuration manner that matches the occupancy mode may be configuring through the virtualization manager.

Step 7304. Configure the physical address and the control information into the direct memory access controller according to the configuration manner by using the target virtual machine.

In an optional example, step 7304 may be performed by the processor by calling corresponding instructions stored in the memory, or may be performed by a configuration submodule in the configuration module that is run by the processor.

If the occupancy mode is the exclusive mode, the target virtual machine may directly configure the physical address and the control information into the direct memory access controller. If the occupancy mode is the non-exclusive mode, the target virtual machine may configure the physical address and the control information into the direct memory access controller through the virtualization manager.

In this embodiment of this disclosure, referring to the occupancy mode of the target virtual machine on the direct memory access controller, the configuration manner that matches the occupancy mode may be used to efficiently and reliably configure the physical address and the control information into the direct memory access controller, so that the direct memory access controller can perform data copying with reference to the physical address and the control information.

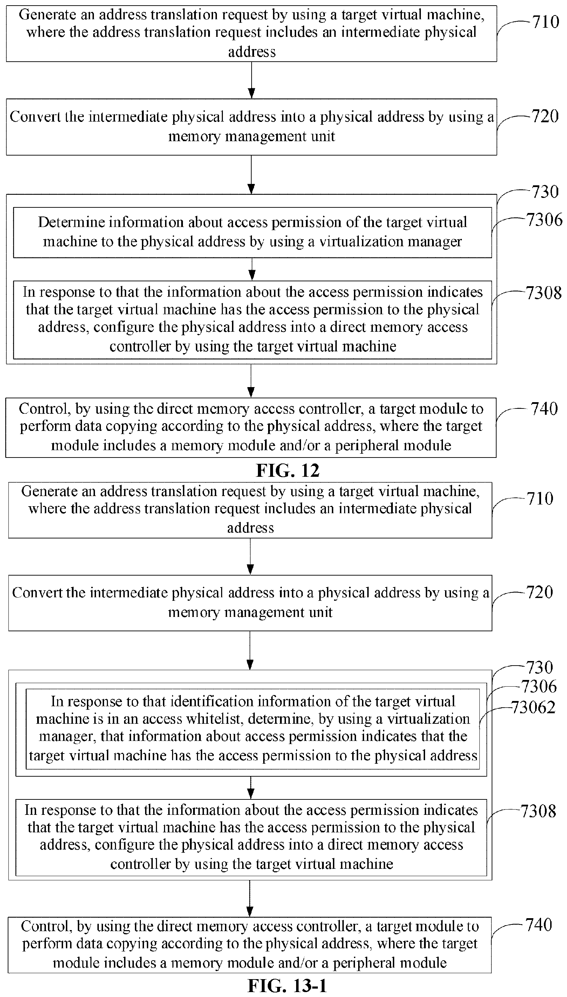

On the basis of the embodiment shown in FIG. 7, as shown in FIG. 12, step 730 includes steps 7306 and 7308.

Step 7306. Determine information about access permission of the target virtual machine to the physical address by using the virtualization manager.

In an optional example, step 7306 may be performed by the processor by calling corresponding instructions stored in the memory, or may be performed by a fourth determining submodule in the configuration module that is run by the processor.

Optionally, the virtualization manager may determine the information about the access permission of the target virtual machine to the physical address according to a predetermined access permission control strategy. The information about the access permission may be used to indicate whether the target virtual machine has the access permission to the physical address.

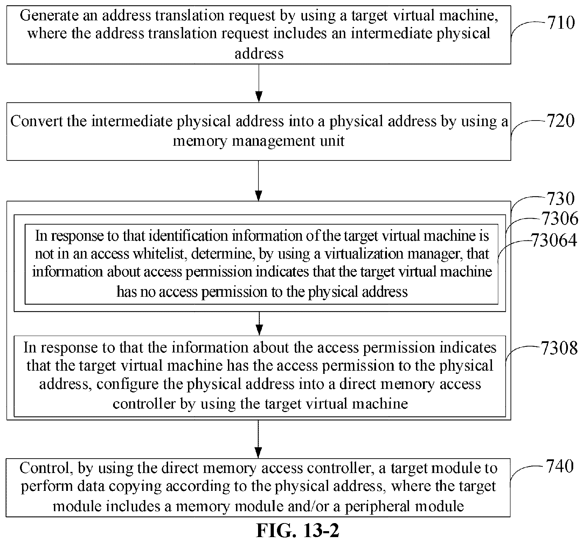

In a specific implementation, the physical address has a corresponding access whitelist, which includes identification information of multiple virtual machines. On the basis of the embodiment shown in FIG. 12, step 7306 includes step 73062 in FIG. 13-1 or step 73064 in FIG. 13-2.

Step 73062. In response to that identification information of the target virtual machine is in an access whitelist, determine, by using the virtualization manager, that the information about the access permission indicates that the target virtual machine has the access permission to the physical address.

Step 73064. In response to that the identification information of the target virtual machine is not in the access whitelist, determine, by using the virtualization manager, that the information about the access permission indicates that the target virtual machine has no access permission to the physical address.

It should be noted that a correspondence between the physical address and the access whitelist may be pre-stored. After the intermediate physical address included in the address translation request is converted into the physical address by using the memory management unit, the virtualization manager may determine the access whitelist corresponding to the physical address based on the pre-stored correspondence. Moreover, the access whitelist corresponding to the physical address may be traversed to determine whether the identification information of the target virtual machine is in the access whitelist corresponding to the physical address.

If the identification information of the target virtual machine is in the access whitelist corresponding to the physical address, the information about the access permission that is determined by the virtualization manager may be represented by using "1", so as to indicate that the target virtual machine has the access permission to the physical address. If the identification information of the target virtual machine is not in the access whitelist corresponding to the physical address, the information about the access permission that is determined by the virtualization manager may be represented by using "0", so as to indicate that the target virtual machine has no access permission to the physical address.

According to this implementation, due to the setting of the access whitelist, whether the target virtual machine has the access permission to the physical address may be efficiently and reliably determined by determining whether the identification information of the target virtual machine is in the access whitelist corresponding to the physical address.

It should be noted that during specific implementation, a corresponding access blacklist may also be set for the physical address. If the identification information of the target virtual machine is in the access blacklist, the information about the access permission may indicate that the target virtual machine has no access permission to the physical address. If the identification information of the target virtual machine is not in the access blacklist, the information about the access permission may indicate that the target virtual machine has the access permission to the physical address.

Step 7308. In response to that the information about the access permission indicates that the target virtual machine has the access permission to the physical address, configure the physical address into the direct memory access controller by using the target virtual machine.

In an optional example, step 7308 may be performed by the processor by calling corresponding instructions stored in the memory, or may be performed by the configuration submodule in the configuration module that is run by the processor.

If the information about the access permission indicates that the target virtual machine has the access permission to the physical address, the virtualization manager may send the physical address to the target virtual machine, which may configure the physical address into the direct memory access controller. In this way, the direct memory access controller may perform data copying based on the physical address.

If the information about the access permission indicates that the target virtual machine has no access permission to the physical address, the virtualization manager may not send the physical address to the target virtual machine, which may not configure the physical address.

In the embodiments of this disclosure, the information about the access permission of the target virtual machine to the physical address may be determined by using the virtualization manager. In the case where the information about the access permission indicates that the target virtual machine has the access permission to the physical address, the physical address is configured in the direct memory access controller by using the target virtual machine. Therefore, in the embodiments of this disclosure, before the physical address is configured into the direct memory access controller, the virtualization manager is used to make access permission related judgments, thereby restricting which areas the target virtual machine can access through the direct memory access controller. Thus, it is beneficial for ensuring security of the target virtual machine accessing the memory through the direct memory access controller.

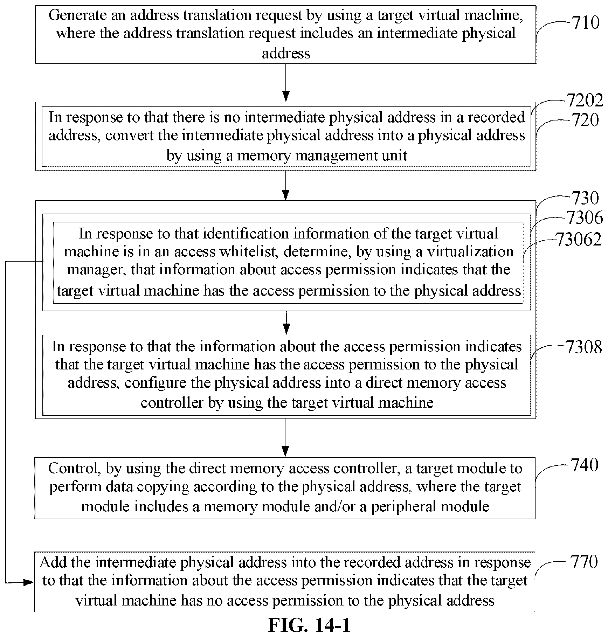

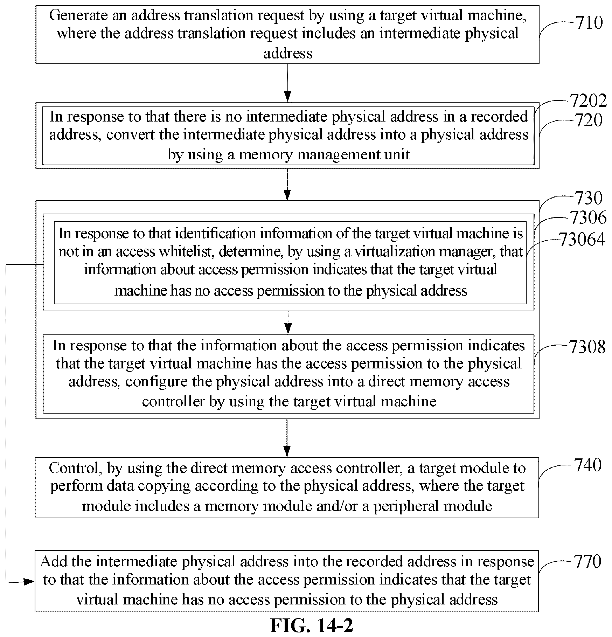

On the basis of the embodiment shown in FIG. 13-1 or FIG. 13-2, as shown in FIG. 14-1 or FIG. 14-2, step 720 includes step 7202.

Step 7202. In response to that there is no intermediate physical address in a recorded address, convert the intermediate physical address into a physical address by using the memory management unit.

The method further includes step 770.

Step 770. Add the intermediate physical address into the recorded address in response to that the information about the access permission indicates that the target virtual machine has no access permission to the physical address.

In an optional example, step 770 may be performed by the processor by calling corresponding instructions stored in the memory, or may be performed by an adding module that is run by the processor.

Optionally, the recorded address may be represented in a form of an address table.

In an optional example, the target virtual machine is the Guest OS A. Assuming that after generating an address translation request that includes an intermediate physical address of IPA 0, the Guest OS A sends the address translation request to the virtualization manager, the virtualization manager may traverse the recorded address to determine whether the IPA 0 exists in the recorded address.

If the IPA 0 exists in the recorded address, the virtualization manager may reject the address translation request from the Guest OS A.

If the IPA 0 does not exist in the recorded address, the virtualization manager may call the memory management unit to convert the IPA 0 into a physical address, and the physical address obtained through conversion may be PA 0. The virtualization manager may also determine information about access permission of the Guest OS A to the PA 0. If the information about the access permission indicates that the Guest OS A does not have access permission to the PA 0, the virtualization manager may add the IPA 0 to the recorded address. If the information about the access permission indicates that the Guest OS A has the access permission to the PA 0, the virtualization manager may not add the IPA 0 to the recorded address. The virtualization manager may also send the PA 0 to the Guest OS A, so that the Guest OS A may configure the PA 0 into the direct memory access controller.

For the situation in the previous paragraph where the information about the access permission indicates that the Guest OS A has no access permission to the PA 0, since the virtualization manager adds the IPA0 to the recorded address, after the Guest OS A generates an address translation request that includes the intermediate physical address of IPA 0 again and sends the address translation request to the virtualization manager, the virtualization manager may determine that the IPA 0 exists in the recorded address by traversing the recorded address. In this case, the virtualization manager may reject the address translation request from the Guest OS A without calling the memory management unit to convert the IPA 0 into a physical address, and without performing a step of determining the information about the access permission based on the physical address and a step of configuring the physical address, thereby being beneficial for saving computing resources.

In the embodiments of this disclosure, by updating and utilizing the recorded addresses, there is no need to convert the intermediate physical addresses in any address translation request by using the memory management unit, but only the intermediate physical address that does not exist in the recorded addresses needs to be converted, thereby being beneficial for saving computing resources.

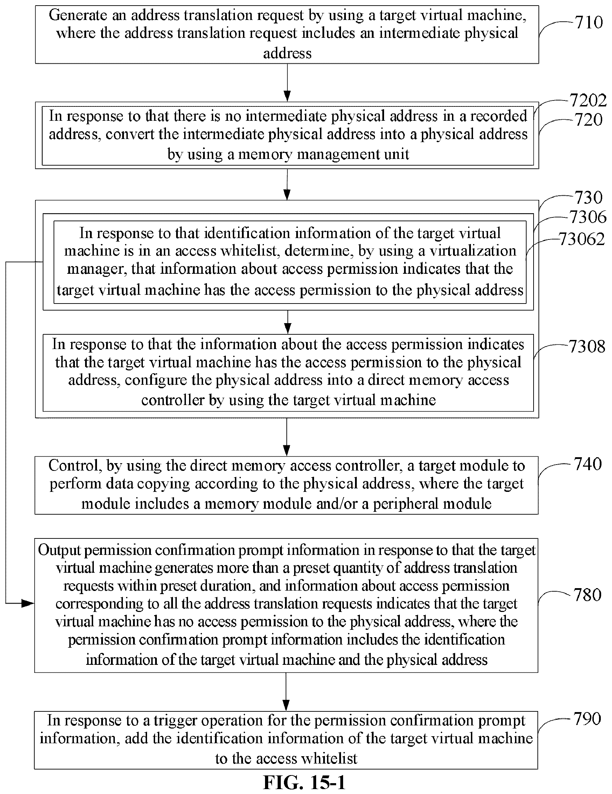

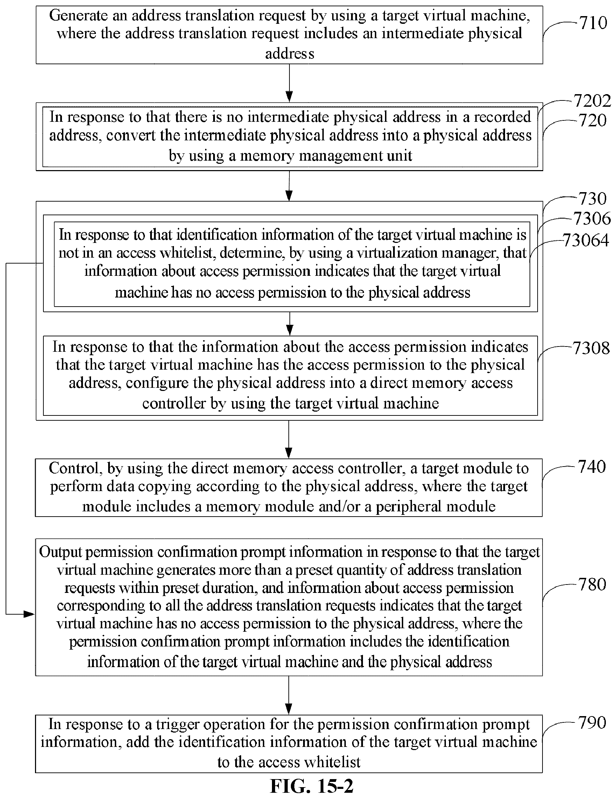

On the basis of the embodiment shown in FIG. 13-1 or FIG. 13-2, as shown in FIG. 15-1 or FIG. 15-2, the method further includes steps 780 and 790.

Step 780. Output permission confirmation prompt information in response to that the target virtual machine generates more than a preset quantity of address translation requests within preset duration, and information about access permission corresponding to all the address translation requests indicates that the target virtual machine has no access permission to the physical address, wherein the permission confirmation prompt information includes the identification information of the target virtual machine and the physical address.

In an optional example, step 780 may be performed by the processor by calling corresponding instructions stored in the memory, or may be performed by the output module that is run by the processor.

Optionally, the preset duration may be 30 seconds, 1 minute, 2 minutes, or the like; and the preset quantity may be 30, 40, 50, 60, 100, or the like, which are not enumerated herein.

Assuming that the target virtual machine generates 105 address translation requests that include the physical address within 1 minute, and based on the access whitelist corresponding to the physical address, the virtualization manager determines that the information about the access permission corresponding to all the address translation requests indicates that the target virtual machine has no access permission to the physical address, in this case, the permission confirmation prompt information including the identification information of the target virtual machine and the physical address may be output in a form of voice or text. For example, "Please confirm whether the Guest OS A has access permission to PA 0" may be broadcasted through voice. For another example, "Please confirm whether Guest OS A has access permission to PA 0" may be displayed through a pop-up window on the screen, so as to prompt the person to confirm whether the Guest OS A has access permission to the PA 0.

Step 790. In response to a trigger operation for the permission confirmation prompt information, add the identification information of the target virtual machine to the access whitelist.

In an optional example, step 790 may be performed by the processor by calling corresponding instructions stored in the memory, or may be performed by the adding module that is run by the processor.

Optionally, regarding the permission confirmation prompt information output in step 780, the person may say "yes" or "no". If the person says "yes", it may be considered that a trigger operation for the permission confirmation prompt information is received. In this case, a name of Guest OS A may be added to the access whitelist. Alternatively, two selection buttons of "Yes" and "No" may be displayed below the pop-up window on the screen. Regarding the permission confirmation prompt information output in step 780, the person may select the selection button of "Yes" or "No" manually. If the selection button of "Yes" is manually selected by the person, it may be considered that the trigger operation for the permission confirmation prompt information is received. In this case, the name of Guest OS A may be added to the access whitelist.

In the embodiments of this disclosure, if the target virtual machine generates a large number of address translation requests including the same intermediate physical address in a short period of time, and information about access permission corresponding to these address translation requests indicates that the target virtual machine has no access permission to the physical address, the output of the permission confirmation prompt information may be used to prompt the person to confirm whether the target virtual machine has the access permission to the physical address. If the person confirms that the target virtual machine has the access permission to the physical address, the identification information of the target virtual machine may be added to the access whitelist, thereby ensuring accuracy of information recorded in the access whitelist.

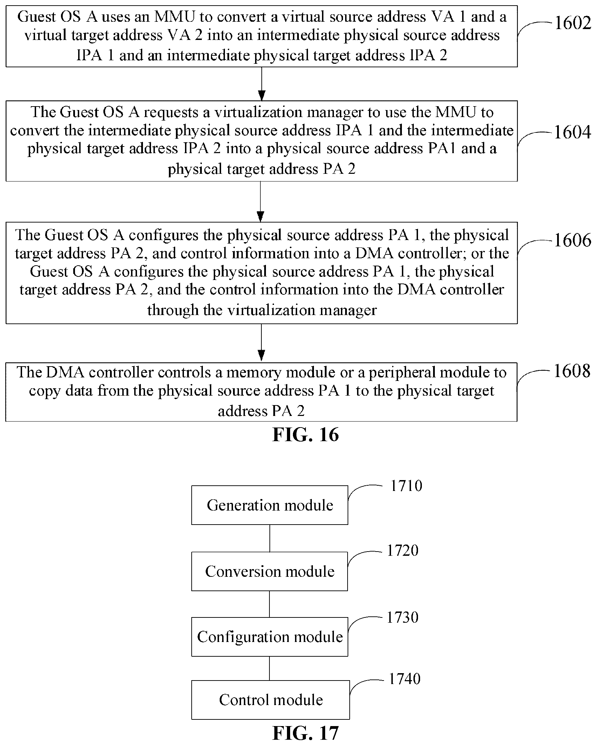

Optionally, as shown in FIG. 16, the data copying method provided in the embodiments of this disclosure may include the following steps.

Step 1602. Guest OS A uses an MMU to convert a virtual source address VA 1 and a virtual target address VA 2 into an intermediate physical source address IPA 1 and an intermediate physical target address IPA 2.

Step 1604. The Guest OS A requests the virtualization manager to use the MMU to convert the intermediate physical source address IPA 1 and the intermediate physical target address IPA 2 into a physical source address PA1 and a physical target address PA 2.

Step 1606. The Guest OS A configures the physical source address PA 1, the physical target address PA 2, and the control information into the DMA controller (suitable for a situation where the Guest OS A exclusively occupies the DMA controller); or the Guest OS A configures the physical source address PA 1, the physical target address PA 2, and the control information into the DMA controller through the virtualization manager (suitable for a situation where the Guest OS A shares the DMA controller with other virtual machines).

Step 1608. The DMA controller controls the memory module or the peripheral module to copy data from the physical source address PA 1 to the physical target address PA 2.

In view of the above, according to the embodiments of this disclosure, virtualization of the DMA controller may be implemented on the chip without the SMMU, so that multiple virtual machines running on the chip can correctly and quickly use the DMA controller to copy data, thereby being beneficial for reducing chip costs.

Any data copying method provided in the embodiments of this disclosure may be implemented by any suitable device with a data processing capability, including but not limited to a terminal device and a server. Alternatively, any data copying method provided in the embodiments of this disclosure can be implemented by the processor. For example, the processor implements any data copying method described in the embodiments of this disclosure by calling corresponding instructions stored in the memory. Details are not described below.

Persons of ordinary skills in the art may understand that: all or some of the steps for implementing the foregoing method embodiments may be completed through hardware related to program instructions. A program may be stored in a computer readable storage medium. During execution, the program performs the steps including the foregoing method embodiments. The foregoing storage medium includes various media that may store program code, such as a read-only memory (ROM), a random access memory (RAM), a magnetic disk, or a compact disc.

### Exemplary apparatus

FIG. 17 is a schematic diagram of a structure of a data copying apparatus according to an exemplary embodiment of this disclosure. The apparatus shown in FIG. 17 may be configured to implement any one of the foregoing method embodiments of this disclosure. The apparatus shown in FIG. 17 includes a generation module 1710, a conversion module 1720, a configuration module 1730, and a control module 1740.

The generation module 1710 is configured to generate an address translation request by using a target virtual machine, where the address translation request includes an intermediate physical address.

The conversion module 1720 is configured to convert the intermediate physical address included in the address translation request generated by the generation module 1710 into a physical address by using a memory management unit.

The configuration module 1730 is configured to configure the physical address converted by the conversion module 1720 into a direct memory access controller by using the target virtual machine.

The control module 1740 is configured to control, by using the direct memory access controller, a target module to perform data copying according to the physical address converted by the conversion module 1720, wherein the target module includes a memory module and/or a peripheral module.

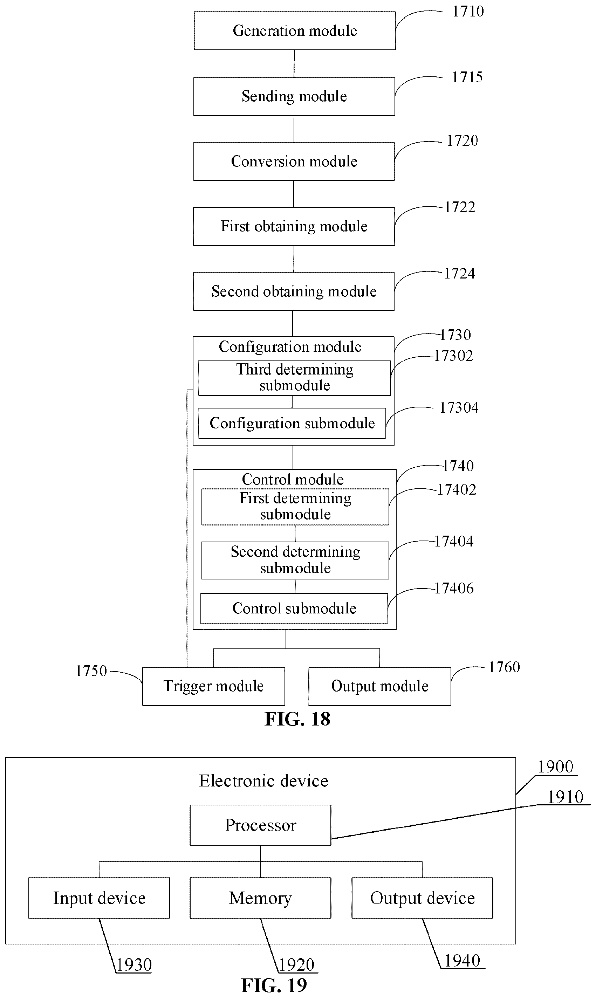

In an optional example, as shown in FIG. 18, the apparatus further includes:
a sending module 1715, configured to send the intermediate physical address to the memory management unit by using a virtualization manager before the intermediate physical address included in the address translation request generated by the generation module 1710 is converted into a physical address by using the memory management unit.

In an optional example, the intermediate physical address includes an intermediate physical source address and an intermediate physical target address, and the physical address includes a physical source address converted from the intermediate physical source address and a physical target address converted from the intermediate physical target address.

As shown in FIG. 18, the control module 1740 includes:
a first determining submodule 17402, configured to determine data feature information of stored data corresponding to the physical source address;
a second determining submodule 17404, configured to determine a copying manner that matches the data feature information determined by the first determining submodule 17402; and
a control submodule 17406, configured to control, by using the direct memory access controller, the target module to copy the stored data from the physical source address to the physical target address according to the copying manner determined by the second determining submodule 17404.

In an optional example, as shown in FIG. 18, the apparatus further includes:
a trigger module 1750, configured to trigger the configuration module 1730 after the control module 1740 controls, by using the direct memory access controller, the target module to perform data copying according to the physical address, and in response to detecting that the data copying is failed and a quantity of times for which the data copying has failed does not reach a preset number; and
an output module 1760, configured to output exception prompt information for the direct memory access controller after the control module 1740 controls, by using the direct memory access controller, the target module to perform data copying according to the physical address, and in response to detecting that the data copying is failed and the quantity of times for which the data copying has failed reaches the preset number.

In an optional example, as shown in FIG. 18, the apparatus further includes:
a first obtaining module 1722, configured to obtain an occupancy mode of the target virtual machine on the direct memory access controller before the physical address is configured into the direct memory access controller by using the target virtual machine; and
a second obtaining module 1724, configured to obtain control information for the direct memory access controller.

The configuration module 1730 includes:
a third determining submodule 17302, configured to determine a configuration manner that matches the occupancy mode obtained by the first obtaining module 1722; and
a configuration submodule 17304, configured to configure, by using the target virtual machine, the physical address and the control information obtained by the second obtaining module 1724 into the direct memory access controller according to the configuration manner determined by the third determining submodule 17302.

In the apparatus in this disclosure, various optional embodiments, optional implementations, and optional examples described above may be flexibly selected and combined according to requirements, so as to implement corresponding functions and effects. These are not enumerated in this disclosure.

### Exemplary electronic device

FIG. 19 shows a block diagram of an electronic device according to an embodiment of this disclosure. An electronic device 1900 includes one or more processors 1910 and a memory 1920.

The processor 1910 may be a central processing unit (CPU) or another form of processing unit having a data processing capability and/or an instruction execution capability, and may control other components in the electronic device 1900 to implement desired functions.

The memory 1920 may include one or more computer program products, which may include various forms of computer readable storage media, such as a volatile memory and/or a non-volatile memory. The volatile memory may include, for example, a random access memory (RAM) and/or a cache. The nonvolatile memory may include, for example, a read-only memory (ROM), a hard disk, and a flash memory. One or more computer program instructions may be stored on the computer readable storage medium. The processor 1910 may execute one or more of the program instructions to implement the data copying method according to any one of the method embodiments of this disclosure that are described above and/or other desired functions.

In an optional example, the electronic device 1900 may further include an input device 1930 and an output device 1940. These components are connected to each other through a bus system and/or another form of connection mechanism (not shown).

The input device 1930 may further include, for example, a keyboard and a mouse.

The output device 1940 can output various information to the outside. The output device 1940 may include, for example, a display, a speaker, a printer, a communication network, and a remote output device connected by the communication network.

Certainly, for simplicity, FIG. 19 shows only some of components in the electronic device 1900 that are related to this disclosure, and components such as a bus and an input/output interface are omitted. In addition, according to specific application situations, the electronic device 1900 may further include any other appropriate components.

### Exemplary computer program product and computer readable storage medium

In addition to the foregoing method and device, the embodiments of this disclosure may also relate to a computer program product, which includes computer program instructions. When the computer program instructions are run by a processor, the processor is enabled to perform the steps, of the data copying method according to any one of the method embodiments of this disclosure, that are described in the "Exemplary method" section of this specification.

The computer program product may be program code, written with one or any combination of a plurality of programming languages, that is configured to perform the operations in the embodiments of this disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of this disclosure may further relate to a computer readable storage medium, which stores computer program instructions. When the computer program instructions are run by the processor, the processor is enabled to perform the steps, of the data copying method according to any one of the method embodiments of this disclosure, that are described in the "Exemplary method" section of this specification.

The computer readable storage medium may be one readable medium or any combination of a plurality of readable media. The readable medium may be a readable signal medium or a readable storage medium. The readable storage medium may include, for example but is not limited to electricity, magnetism, light, electromagnetism, infrared ray, or a semiconductor system, an apparatus, or a device, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of this disclosure are described above in combination with specific embodiments. However, it should be pointed out that the advantages, superiorities, and effects mentioned in this disclosure are merely examples but are not for limitation, and it cannot be considered that these advantages, superiorities, and effects are necessary for each embodiment of this disclosure. In addition, specific details described above are merely for examples and for ease of understanding, rather than limitations. The details described above do not limit that this disclosure must be implemented by using the foregoing specific details.

A person skilled in the art may make various modifications and variations to this disclosure without departing from the spirit and the scope of this application. In this way, if these modifications and variations of this application fall within the scope of the claims and equivalent technologies of the claims of this disclosure, this disclosure also intends to include these modifications and variations.

## Claims

1. A data copying method, comprising:
generating an address translation request by using a target virtual machine, wherein the address translation request comprises an intermediate physical address;
converting the intermediate physical address into a physical address by using a memory management unit;
configuring the physical address into a direct memory access controller by using the target virtual machine; and
controlling, by using the direct memory access controller, a target module to perform data copying according to the physical address, wherein the target module comprises a memory module and/or a peripheral module.

2. The method according to claim 1, wherein before the converting the intermediate physical address into a physical address by using a memory management unit, the method further comprises:
sending the intermediate physical address to the memory management unit by using a virtualization manager.

3. The method according to claim 1, wherein the intermediate physical address comprises an intermediate physical source address and an intermediate physical target address, and the physical address comprises a physical source address converted from the intermediate physical source address and a physical target address converted from the intermediate physical target address; and
the controlling, by using the direct memory access controller, a target module to perform data copying according to the physical address comprises:
determining data feature information of stored data corresponding to the physical source address;
determining a copying manner that matches the data feature information; and
controlling, by using the direct memory access controller, the target module to copy the stored data from the physical source address to the physical target address according to the copying manner.

4. The method according to claim 1, wherein after the controlling, by using the direct memory access controller, a target module to perform data copying according to the physical address, the method further comprises:
in response to detecting that the data copying is failed and a quantity of times for which the data copying has failed does not reach a preset number, returning to perform the step of the configuring the physical address into a direct memory access controller by using the target virtual machine; and
in response to detecting that the data copying is failed and the quantity of times for which the data copying has failed reaches the preset number, outputting exception prompt information for the direct memory access controller.

5. The method according to claim 1, wherein
before the configuring the physical address into a direct memory access controller by using the target virtual machine, the method further comprises:
obtaining an occupancy mode of the target virtual machine on the direct memory access controller; and
obtaining control information for the direct memory access controller; and
the configuring the physical address into a direct memory access controller by using the target virtual machine comprises:
determining a configuration manner that matches the occupancy mode; and
configuring the physical address and the control information into the direct memory access controller according to the configuration manner by using the target virtual machine.

6. A data copying apparatus, comprising:
a generation module, configured to generate an address translation request by using a target virtual machine, wherein the address translation request comprises an intermediate physical address;
a conversion module, configured to convert the intermediate physical address comprised in the address translation request generated by the generation module into a physical address by using a memory management unit;
a configuration module, configured to configure the physical address converted by the conversion module into a direct memory access controller by using the target virtual machine; and
a control module, configured to control, by using the direct memory access controller, a target module to perform data copying according to the physical address converted by the conversion module, wherein the target module comprises a memory module and/or a peripheral module.

7. The apparatus according to claim 6, further comprising:
a sending module, configured to send the intermediate physical address comprised in the address translation request generated by the generation module to the memory management unit by using a virtualization manager before the intermediate physical address comprised in the address translation request generated by the generation module is converted into a physical address by using the memory management unit.

8. The apparatus according to claim 6, wherein the intermediate physical address comprises an intermediate physical source address and an intermediate physical target address, and the physical address comprises a physical source address converted from the intermediate physical source address and a physical target address converted from the intermediate physical target address; and
the control module comprises:
a first determining submodule, configured to determine data feature information of stored data corresponding to the physical source address;
a second determining submodule, configured to determine a copying manner that matches the data feature information determined by the first determining submodule; and
a control submodule, configured to control, by using the direct memory access controller, the target module to copy the stored data from the physical source address to the physical target address according to the copying manner determined by the second determining submodule.

9. A computer readable storage medium, wherein the storage medium stores a computer program, and the computer program is used for implementing the data copying method according to any one of claims 1 to 5.

10. An electronic device, comprising:
a processor; and
a memory, configured to store processor-executable instructions, wherein
the processor is configured to read the executable instructions from the memory, and execute the instructions to implement the data copying method according to any one of claims 1 to 5.

11. A computer program product, wherein when instructions in the computer program product are executed by a processor, the data copying method according to any one of claims 1 to 5 is implemented.
